# EUROPÄISCHE PATENTSCHRIFT

(11) **EP 0 688 693 B1**
(45) Veröffentlichungstag und Bekanntmachung des Hinweises auf die Patenterteilung: **10.03.1999**
(21) Anmeldenummer: 95109009.1
(22) Anmeldetag: 12.06.1995
(51) Int. Cl.: B60K 17/08, F16H 37/00

(54) **Getriebeaggregat für Kraftfahrzeuge, insbesondere mit Frontantrieb**
Gearbox for motor vehicles, especially with front wheel drive
Boîte de vitesses pour véhicule à moteur, en particulier à traction avant

(30) Priorität: 23.06.1994 DE 4421926
(43) Veröffentlichungstag der Anmeldung: 27.12.1995
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Hofmann, Harald, D-50767 Pesch (DE)
(74) Vertreter: Messulam, Alec Moses

(56) Entgegenhaltungen:
- EP-A- 0 399 502
- EP-A- 0 409 630
- EP-A- 0 460 210
- FR-A- 1 327 773
- JP-A- 5 272 352

## Beschreibung

Die Erfindung bezieht sich auf ein Kraftfahrzeug, mit Frontantrieb, mit einem Getriebeaggregat.

Aus der EP-OS 0 196 871 ist ein Kraftfahrzeug mit Frontantrieb mit einem Getriebeaggregat bekannt.

Bei diesem bekannten Kraftfahrzeug, mit Frontantrieb mit einem Getriebeaggregat, ist der Motor mit seiner Zylinderhochachse sehr flach nach vorne geneigt quer im Fahrzeug angeordnet und das in herkömmlicher Weise aus einer fluchtend zur Kurbelwelle liegenden Eingangswelle, einer hierzu parallelen Vorgelegewelle und einer von dieser angetriebenen Differentialgetriebeeinheit bestehenden Getriebeaggregat liegt mit seinen Antriebsachsen in Fahrzeuglängsrichtung gesehen etwa auf Höhe der Kurbelwelle und unterhalb des Motors.

Bei diesem bekannten Kraftfahrzeug, mit Frontantrieb mit einem Getriebeaggregat liegt daher der Motor gegenüber den Antriebsachsen der Vorderräder weiter vorn, was zwar für die Raumausnutzung im Fahrzeug günstig ist, jedoch beim Crashverhalten des Fahrzeuges nachteilig ist, da unmittelbar schon bei geringer Frontendverformung der harte Motorblock getroffen wird.

Aus der EP-PS 0 318 971 ist ein weiteres Kraftfahrzeuge, mit Frontantrieb, mit einem Getriebeaggregat bekannt, bei dem der Motor mit seiner Zylinderhochachse leicht nach hinten geneigt quer im Fahrzeug eingebaut ist und das Wechselgetriebe weist eine Eingangswelle auf, die parallel zur Kurbelwelle angeordnet ist und über ein entsprechendes Zahnradpaar angetrieben wird. Die Eingangswelle des Wechselgetriebes kann somit in Fahrzeuglängsrichtung betrachtet vor der Kurbelwelle angeordnet werden und im Zuge der Vorgelegewelle und dem Differentialgetriebe gelangen die Antriebsachsen der Vorderräder in eine Lage, in der sie in Fahrzeugrichtung betrachtet um einiges hinter der Lage der Kurbelwelle des Motors liegen.

Auch dieses bekannte Kraftfahrzeug mit einem Getriebeaggregat weist den Nachteil auf, daß zwar für eine günstige Raumausnutzung im Kraftfahrzeug gesorgt wird, daß jedoch der relativ harte Motor sehr weit vorne in der für ein günstiges Crashverhalten erforderlichen sogenannten Knautschzone liegt.

Aus der JP-A-5 272 352 ist ein Kraftfahrzeug mit Frontantrieb bekannt, das dem Oberbegriff des Patentanspruches 1 entspricht.

Bei diesem bekannten Kraftfahrzeug mit Frontantrieb ist das auf der dritten Achse angeordnete zweite Kettenrad und das mit diesem drehfest verbundene Zahnrad auf einer Vorschaltwelle angeordnet die die axiale Länge des Getriebeaggregates verlängert und die Lage des Differentialgetriebes zur Seite hin verlagert.

Die Anordnung dieses Getriebeaggregates für Kraftfahrzeuge innerhalb des Kraftfahrzeuges kann nicht in einer Weise erfolgen, die sowohl eine optimale Raumausnutzung als auch ein gutes Crash-Verhalten eines kleinen Kraftfahrzeuges ermöglicht.

Das Ziel der Erfindung ist es, ein Kraftfahrzeuge, mit Frontantrieb mit einem Getriebeaggregat zu schaffen, bei dem der mit seiner Zylinderhochachse schräg nach vorn geneigte quer im Fahrzeug eingebaute Motor verhältnismäßig weit hinten angeordnet werden kann und dennoch der für eine gute Raumausnutzung bei einem kleinen Kraftfahrzeug erwünschte große Radstand realisiert werden kann, damit zum Beginn eines Crashvorganges zunächst eine weichere Knautschzone angeordnet werden kann und bei einem massiveren Aufprall der dann getroffene Motor durch seine Neigung nach vorn, unterhalb des Fußbereiches des Fahrgastraumes weggedrückt werden kann.

Gemäß der Erfindung wird dieses Ziel erreicht, indem ein Kraftfahrzeug mit Frontantrieb mit einem Getriebeaggregat der im Oberbegriff des Patentanspruches 1 erläuterten Art, die im Kennzeichenteil des Patentanspruches 1 aufgezeigten Merkmale aufweist.

Im Anspruch 2 ist eine zweckmäßige Ausgestaltungen der Erfindung näher erläutert.

Dadurch, daß der Motor mit seiner Zylinderhochachse schräg nach vorn geneigt im Fahrzeug eingebaut ist und das zweite Kettenrad und das Zahnrad auf der dritten Achse lose laufend angeordnet sind und das Zahnrad mit einer Synchronisiereinrichtung versehen ist, deren Synchronnabe auf der Ausgangswelle angeordnet ist und über deren Schiebemuffe ein als Schellgang ausgelegter 6. Gang schaltbar ist, wird bei Erhöhung des Wirkungsgrades der Übersetzung die Antriebsachse für die Vorderräder in Fahrtrichtung gesehen, um einiges vor die Lage der Kurbelwelle verlegt.

Die Erfindung wird anhand eines in den beiliegenden Zeichnungen gezeigten Ausführungsbeispieles näher erläutert. Es zeigt:
- Fig. 1: eine schematische Seitenansicht des Getriebeaggregates mit dem nur in Umrissen angedeuteten Motor und dem Gehäuse des Wechselgetriebes und den mit I bis VI bezeichneten Wellen des Wechselgetriebes und
- Fig. 2: eine Getriebeaufrollung des Getriebeaggregates.

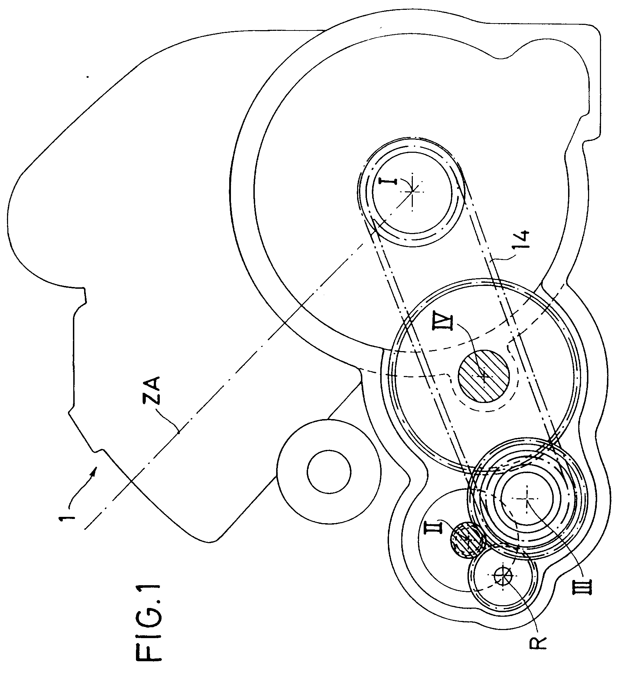

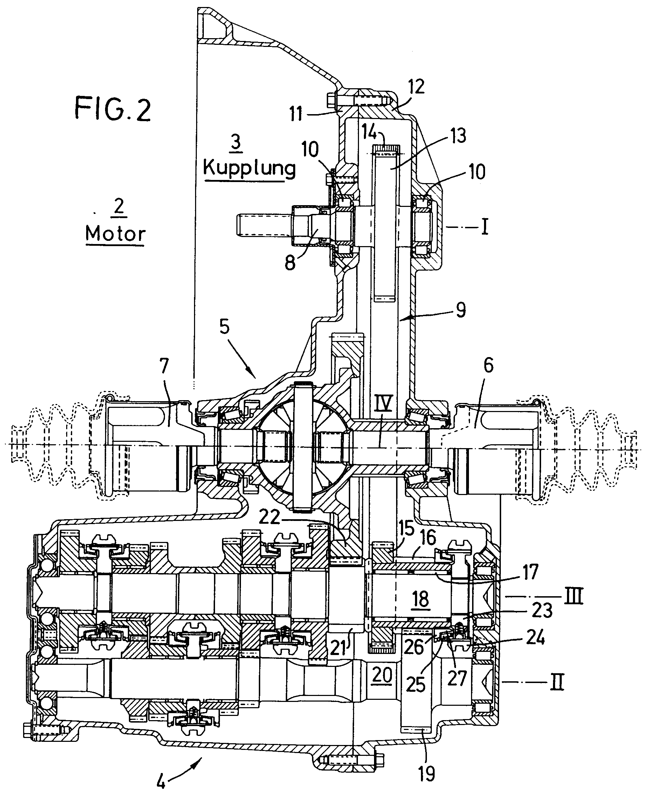

Bei dem in den Figuren 1 und 2 nur angedeuteten kompakten, quer im Fahrzeug angeordneten Antriebseinheit 1 eines Kraftfahrzeuges mit Frontantrieb ist der Motor 2 mit seiner Zylinderhochachse ZA in einem Winkel von 30 bis 45 Grad nach vorne geneigt angeordnet.

Fluchtend mit der nicht gezeigten Kurbelwelle des Motors 2 ist eine herkömmliche Kupplung 3 angeordnet, deren Einzelteile nicht dargestellt sind, da sie für das Verständnis der nachfolgenden Erfindung, die sich auf das Getriebeaggregat bezieht, nicht erforderlich sind.

Das Getriebeaggregat besteht im wesentlichen aus einem Wechselgetriebe 4 und einem Differentialgetriebe 5, von dem Achsantriebswellen 6 und 7 zu den Vorderrädern des Fahrzeuges führen.

Das Getriebeaggregat weist im wesentlichen vier Achsen auf, die in der Reihenfolge ihres Zusammenwirkens mit den römischen Zahlen I, II, III und IV bezeichnet sind.

Auf der Achse I liegt die Kurbelwelle des Motors 2 (nicht gezeigt) sowie die Kupplung 3 (nicht gezeigt), die eine Übernahmewelle 8 eines Kettentriebes 9 antreibt, die über Lager 10 im zweiteiligen Kupplungs- und Getriebegehäuse 11/12 drehbar gelagert ist.

Die Übernahmewelle 8 weist ein Kettenrad 13 auf, das über eine Kette 14 ein Kettenrad 15 antreibt, das mit einem Zahnrad 16 drehfest verbunden ist und mit diesem über Lager 17 lose drehbar auf der auf der Achse III liegenden Ausgangswelle 18 des Wechselgetriebes 4 angeordnet ist. Das Zahnrad 16 steht in Eingriff mit einem Übergabe Zahnrad 19, das auf der auf der Achse II liegenden Eingangswelle 20 des Wechselgetriebes 4 angeordnet ist.

Auf der auf der Achse III liegenden Ausgangswelle 18 ist ein Ritzel 21 angeordnet, das in Eingriff mit einem Antriebsrad 22 des Differentialgetriebes 5 steht, von dem aus die Antriebswellen 6 und 7 in herkömmlicher Weise angetrieben werden.

Auf der Eingangswelle 20 auf der dritten Achse III sind feste Zahnräder für einen ersten, zweiten, fünften und einen Rückwärtsgang und lose Zahnräder für einen dritten und einen vierten Gang angeordnet. Zwischen den losen Zahnrädern ist in bekannter Weise eine entsprechende Synchronisierkupplung angeordnet. Auf der Ausgangswelle 18 auf der dritten Achse III sind lose Zahnräder für einen ersten, einen zweiten und einen fünften Gang und einen synchronisierten Rückwärtsgang angeordnet. Zwischen den entsprechenden losen Zahnrädern sind wieder in üblicher Weise entsprechende Synchronisierkupplungen angeordnet. Auf der Ausgangswelle 18 sind weiterhin die Festräder für den dritten und vierten Gang angeordnet. Auf der Ausgangswelle 18 auf der dritten Achse III ist weiterhin zwischen dem Kettenrad 15 mit dem Zahnrad 16 und dem losen Zahnrad für den ersten Gang ein Ritzel 21 angeordnet, das in Eingriff mit einem Endantriebsrad 22 des Differentialgetriebes 5 steht, von dem aus in herkömmlicher Weise über an sich bekannte Kegelrad-Ausgleichs- und Achsantriebsräder die Achsantriebswellen 6 und 7 für die Vorderräder des Kraftfahrzeuges angetrieben sind.

In bekannter Weise ist das Differentialgetriebe 5 mit den entsprechenden Ausgleichs- und Achsantriebskegelrädern und den sich an die Achswellen 6 und 7 anschließenden Antriebsgelenke für die Frontantriebsachsen versehen, die gleichfalls nicht im einzelnen erläutert werden.

Selbstverständlich sind die Ausgangswelle 18 und die Eingangswelle 20 in herkömmlicher Weise im Kupplungs-Getriebegehäuse 11/12 über entsprechende Lager drehbar gelagert angeordnet.

Das Wesentliche der Erfindung liegt in dem Kettentrieb 9 in Verbindung mit dem Zahnradpaar 16 und 19, wodurch die Drehrichtung des Motors in der für einen derartigen Quereinbau üblichen Richtung beibehalten werden kann und trotz des Kettentriebes 9, der ein weites nach vorn Verlagern der Achsantriebswellen 6 und 7 ermöglicht, wird mittels des Zahnradpaares 16 und 19 die Drehrichtung der Eingangswelle 20 des Wechselgetriebes in einer Weise beibehalten, als ob die Übertragung von der Kurbelwelle her über ein Zahnradpaar erfolgen würde.

Durch die gemäß der Erfindung erfolgende Anordnung der Achsen des Wechselgetriebes I, II, III und IV in der besonderen Weise wird der an sich durch den Kettentrieb 9 und das Zahnradpaar 16/19 gegebene Nachteil im Wirkungsgrad für den als Schnellgang ausgelegten 6. Gang wie folgt aufgehoben.

Auf der Ausgangswelle 18 ist benachbart dem Kettenrad/Zahnrad 15/16 eine Synchronnabe 23 mit einer Schaltmuffe 24 angeordnet, die über einen Sperrsynchronring 25 auf einen mit einer Kupplungsverzahnung 26 versehenen Synchronkonus 27 einwirken kann.

Durch Verschieben der Schaltmuffe 24 in Fig. 2 gesehen nach links wird das Kettenrad/Zahnrad 15/16 treibend mit der Ausgangswelle 18 verbunden und der Antrieb erfolgt nur über den Kettentrieb 9 und nur über den Zahneingriff vom Ritzel 21 zum Endabtriebszahnrad 22.

Damit wird insbesondere für den ins schnelle übersetzten 6. Gang, der normalerweise gerade bei Autobahnfahrt zum allergrößten Anteil und über längere Zeitspannen in Betrieb ist, eine im Wirkungsgrad wesentlich verbesserte Antriebsanordnung bereitgestellt.

Lediglich der Vollständigkeit halber wird noch darauf hingewiesen, daß in Fig. 1 eine weitere Achse mit R bezeichnet ist, auf der ein Rückwärtsgang-Zwischenrad in an sich herkömmlicher Weise angeordnet ist, um einen Rückwärtsgang bereitzustellen.

## Patentansprüche

1. Kraftfahrzeug mit Frontantrieb, mit einem Getriebeaggregat bestehend aus einer Kupplung (3), einem Kettentrieb (9), einem 5-Gang-Vorgelege-Wechselgetriebe (4) und einem Ausgleichsgetriebe (5), das mit einem Motor (2) eine quer zur Fahrtrichtung angeordnete Antriebseinheit (1) bildet und wobei das Getriebeaggregat teils koaxial zur Kurbelwelle und teils unterhalb der Zylinder liegend angeordnet ist, wobei koaxial zur Kurbelwelle eine Übernahmewelle (8) auf einer ersten Achse (I) angeordnet ist und ein erstes Kettenrad (13) trägt, parallel zur Kurbelwelle in einem Kupplungs-Getriebegehäuse (11/12) eine Eingangswelle (20) auf einer zweiten Achse (II) und eine Ausgangswelle (18) auf einer dritten Achse (III) und das Differentialgetriebe (5) auf einer vierten Achse (IV) angeordnet sind, auf der dritten Achse (III) ein zweites Kettenrad (15) und ein mit diesem drehfest verbundenes Zahnrad (16) angeordnet sind und das erste Kettenrad (13) über eine Kette (14) treibend mit dem zweiten Kettenrad (15) verbunden ist und das Zahnrad (16) in Eingriff mit einem Übergabe Zahnrad (19) steht, das drehfest auf der Eingangswelle (20) auf der zweiten Achse (II) angeordnet ist,
**dadurch gekennzeichnet,** daß
- der Motor (2) mit seiner Zylinderhochachse (ZA) schräg nach vorn geneigt im Fahrzeug eingebaut ist und das zweite Kettenrad (15) und das Zahnrad (16) auf der dritten Achse (III) lose laufend angeordnet sind und das Zahnrad (16) mit einer Synchronisiereinrichtung (23 bis 27) versehen ist, deren Synchronnabe (23) drehfest auf der Ausgangswelle (18) angeordnet ist und über deren Schiebemuffe (24) ein als Schnellgang ausgelegter sechster Gang schaltbar ist.

2. Kraftfahrzeug mit Frontantrieb, mit einem Getriebeaggregat nach Anspruch 1,
**dadurch gekennzeichnet,** daß
- auf der Eingangswelle (20) auf der zweiten Achse (II) feste Zahnräder für einen ersten, zweiten, fünften und einem Rückwärtsgang und lose Zahnräder für einen dritten und vierten Gang sowie eine Synchronisierkupplung angeordnet sind und
- auf der Ausgangswelle (18) auf der dritten Achse (III) lose Zahnräder für den ersten, den zweiten und den fünften Gang und einen synchronisierten Rückwärtsgang sowie deren entsprechende Synchronisierkupplungen und die Festräder für den dritten und vierten Gang angeordnet sind und
- auf der Ausgangswelle (18) auf der dritten Achse (III) zwischen dem Kettenrad (15) und dem losen Zahnrad für den ersten Gang ein Ritzel (21) für das Endantriebsrad (22) des Differentialgetriebes (5) angeordnet ist.

## Claims

1. A front-wheel drive motor vehicle having a gearbox assembly comprising a clutch (3), a chain drive (9), a 5-speed layshaft change-speed gearbox (4) and a differential (5) which, together with an engine (2), form a transversely mounted driving unit, the gearbox assembly being arranged partly coaxially with the crankshaft and partly lying below the cylinders, with, disposed coaxially with the crankshaft, a transfer shaft (8) on a first axis (I) and carrying a first chain wheel (13), and, disposed parallel with the crankshaft, in a clutch-gearbox housing, an input shaft (20) on a second axis (II) and an output shaft (18) on a third axis (III) and the differential (5) on a fourth axis (IV), a second chain wheel (15) and a gear wheel (14) non-rotatably connected thereto being arranged on the third axis (III) and the first chain wheel (13) being drivingly connected to the second chain wheel (15) and the gear wheel (16) meshing with a transfer gear wheel (19) which is carried non-rotatably on the input shaft (20) on the second axis (II),
characterised in that
- the engine (2) is installed in the vehicle with its cylinder vertical axis (ZA) inclined obliquely forwards and the second chain wheel (15) and the gear wheel (16) are provided with a synchronising device (23 to 27) of which the synchroniser hub (23) is fitted non-rotatably on the output shaft (18) and by means of the sliding sleeve (24) of which a sixth gear designed as an overdrive gear can be selected.

2. A front wheel drive motor vehicle according to claim 1,
characterised in that
- the input shaft (20) on the second axis (II) carries fixed gear wheels for a first, a second, a fifth and a reverse gear and loose gear wheels for a third and a fourth gear, and also a synchronising clutch, and
- the output shaft (18) on the third axis (III) carries loose gear wheels for the first, the second and the fifth gear and a synchronised reverse gear, as well as their corresponding synchronising clutches and the fixed gear wheels for the third and fourth gears, and
- the output shaft (18) on the third axis (III) carries, between the chain wheel (15) and the loose gear wheel for the first gear, a pinion (21) for the final drive gear wheel (22) of the differential (5).

## Revendications

1. Véhicule automobile à traction avant, avec un ensemble de transmission qui est constitué d'un embrayage (3), d'une transmission par chaîne (9), d'une boîte (4) à 5 vitesses à renvoi et d'un différentiel (5) et qui forme avec un moteur (2) une unité d'entraînement (1) disposée transversalement à la direction de marche, l'ensemble de transmission étant disposé en étant partiellement coaxial au vilebrequin et partiellement situé en dessous des cylindres, un arbre de transfert (8) étant disposé coaxialement au vilebrequin sur un premier axe (I) et portant une première roue à chaîne (13), un arbre primaire (20) étant disposé parallèlement au vilebrequin sur un deuxième axe (II) dans un carter (11/12) d'embrayage et de transmission, un arbre secondaire (18) étant disposé sur un troisième axe (III) et le différente (5) étant disposé sur un quatrième axe (IV), une deuxième roue à chaîne (15) et un pignon (16) lié en rotation à cette dernière étant disposés sur le troisième axe (III), et la première roue à chaîne (13) étant reliée en entraînement à la deuxième roue à chaîne (15) par l'intermédiaire d'une chaîne (14), tandis que le pignon (16) se trouve en prise avec un pignon de transfert (19) qui est lié en rotation sur l'arbre primaire (20) sur le deuxième axe (II),
**caractérisé** en ce que le moteur (2) est monté dans le véhicule avec son axe normal de cylindres (ZA) incliné en oblique vers l'avant et la deuxième roue à chaîne (15) et le pignon (16) sont disposés à libre rotation sur le troisième axe (III), et le pignon (16) est pourvu d'un synchroniseur (23 à 27) dont le moyeu synchroniseur (23) est lié en rotation sur l'arbre secondaire (18), une sixième vitesse conçue comme vitesse surmultipliée pouvant être enclenchée par l'intermédiaire du manchon coulissant (24) de ce moyeu synchroniseur (23).

2. Véhicule automobile à traction avant avec un ensemble de transmission selon la revendication 1, **caractérisé** en ce que
- des pignons fixes pour une première, deuxième et cinquième vitesses et une vitesse arrière, et des pignons fous pour une troisième et une quatrième vitesses, ainsi qu'un accouplement synchroniseur, sont disposés sur l'arbre primaire (20) sur le deuxième axe (II), et
- des pignons fous pour les première, deuxième et cinquième vitesses et une vitesse arrière synchronisée, ainsi que leurs accouplements synchroniseurs correspondants, et les pignons fixes pour la troisième et la quatrième vitesses, sont disposés sur l'arbre secondaire (18) sur le troisième axe (III), et
- un petit pignon (21) pour le pignon d'entraînement final (22) du différentiel (5) est disposé sur l'arbre secondaire (18) sur le troisième axe (III) entre la roue à chaîne (15) et le pignon fou pour la première vitesse.
